**Europäisches Patentamt**

**European Patent Office**

**Office européen des brevets**

(19)

(11) Veröffentlichungsnummer: **0 027 206**
**B1**

(12) **EUROPÄISCHE PATENTSCHRIFT**

(45) Veröffentlichungstag der Patentschrift:
**27.08.86**

(51) Int. Cl.⁴: **H 01 G 4/18**

(21) Anmeldenummer: **80105917.1**

(22) Anmeldetag: **30.09.80**

(54) **Kondensator.**

(30) Priorität: **12.10.79 JP 130886/79**

(43) Veröffentlichungstag der Anmeldung:
**22.04.81 Patentblatt 81/16**

(45) Bekanntmachung des Hinweises auf die Patenterteilung:
**27.08.86 Patentblatt 86/35**

(84) Benannte Vertragsstaaten:
**DE FR GB IT**

(56) Entgegenhaltungen:
**FR - A - 1 177 220**
**FR - A - 1 308 644**
**GB - A - 964 627**
**GB - A - 1 265 289**

(73) Patentinhaber: **TORAY INDUSTRIES, INC., 2,
Nihonbashi-Muromachi 2-chome Chuo-ku,
Tokyo 103 (JP)**

(72) Erfinder: **Tsunashima, Kenjii,
1-22 Daigokamihayamacho, Fushimi-ku Kyoto (JP)**
Erfinder: **Fukuyama, Takeo, 517 Minamimitsuyacho,
Hikone (JP)**
Erfinder: **Matsuyama, Shigeru, 3-7-5 Karahashito, Otsu
(JP)**

(74) Vertreter: **Wettlauffer, Willy, Dr. et al, Kalle
Niederlassung der Hoechst AG
Rheingaustrasse 190 Postfach 3540,
D-6200 Wiesbaden 1 (DE)**

# Beschreibung

Die vorliegende Erfindung betrifft einen, in seinen elektrischen Eigenschaften verbesserten Kondensator, bei dem eine biaxial gestreckte Polypropylenfolie als Isolation Verwendung findet.

Orientierte, biaxial gestreckte Polypropylenfolien (im folgenden OPP-Folien genannt) werden in grossem Umfang für die Isolierung von gewöhnlichen Kondensatoren verwendet, da sie einen geringeren dielektrischen Verlust aufweisen als Polyesterfolien.

Die normalen OPP-Folien können jedoch nicht für die Isolierung von Normalkondensatoren eingesetzt werden, weil Abweichungen in der Durchschlagsspannung und der Kapazität bei Kondensatoren mit OPP-Folienisolierung grösser sind als bei Kondensatoren mit einer Folienisolierung auf der Basis von Polystyrol. Ein sehr wichtiger Punkt ist ausserdem, dass sich die Dielektrizitätskonstante und der dielektrische Verlust nicht bereits durch geringe Veränderungen in den Nebenbedingungen, wie Temperatur, relative Feuchtigkeit und Frequenz, verschieben dürfen.

Ein Kondensator mit einer herkömmlichen OPP-Folie ist aber nicht frei von Abweichungen bei diesen elektrischen Eigenschaften.

Man hat deshalb versucht, OPP-Folien mit glatteren Oberflächen herzustellen, um so die Abweichungen dieser dielektrischen Eigenschaften auf ein Mindestmass zu beschränken. Dadurch wurde jedoch der Reibungskoeffizient der Folien schlechter und als Folge davon verschlechterten sich auch die Verarbeitungseigenschaften, z.B. bei der Herstellung der OPP-Folien, beim Metallisieren, Längsschneiden und Aufwickeln.

Es stellte sich somit die Aufgabe, Kondensatoren mit unter sich ändernden Nebenbedingungen unveränderlichen Werden in den elektrischen Eigenschaften, wie z.B. der elektrostatischen Kapazität und der Durchschlagsspannung und weiterhin geringem dielektrischem Verlustfaktor bzw. tan δ und hoher elektrostatischer Kapazität herzustellen. Es war ferner Aufgabe der Erfindung, ein Verfahren zur Herstellung der Folie für diese Kondensatoren, die gute Verarbeitungseigenschaften im Hinblick auf den Kondensatorfertigungsprozess hat, d.h. die sich gut aufwickeln, metallisieren und in Längsrichtung schneiden lässt, bereitzustellen.

Gelöst wird die vorstehend genannte Aufgabe durch einen Kondensator bestehend aus Schichten aus biaxial orientierter Polypropylenfolie und Metall, dessen kennzeichnendes Merkmal darin besteht, dass die Polypropylenfolie einen Oberflächenglanz von mehr als 140%, einen durchschnittlichen Brechungsindex von mehr als 1,510 und einen Brechungsindex in Längsrichtung von mehr als 1,510 aufweist.

Der Oberflächenglanz ist eine der Grössen, mit denen die Oberflächenrauhigkeit ausgedrückt wird. Bei hohem Oberflächenglanz ist die Oberflächenrauhigkeit gering, d.h. die Oberfläche ist glatt. Ein Kondensator, der eine OPP-Folie mit hohem Oberflächenglanz enthält, zeigt unveränderliche Werte der elektrischen Eigenschaften, wie z.B. der elektrostatischen Kapazität und Durchschlagsspannung. Es ist also erforderlich, dass der Oberflächenglanz der OPP-Folie über 140%, vorzugsweise über 150%, liegt.

Eine OPP-Folie mit einem Oberflächenglanz von mehr als 140% hat jedoch schlechte Verarbeitungseigenschaften, z.B. beim Aufwickeln, Schneiden in Längsrichtung und Herstellen des KOndensators. Es ist deshalb zusätzlich erforderlich, dass der durchschnittliche Brechungsindex der OPP-Folie über 1,510 liegt, und auch der Brechungsindex in Längsrichtung muss grösser als 1,510 sein.

Ein Kondensator aus OPP-Folie mit einem Brechungsindex von mehr als 1,510 weist sowohl unveränderliche Werte der elektrischen Eigenschaften als auch einen geringen dielektrischen Verlust bzw. tan δ auf. Weiterhin lässt sich die Folie z.B. beim Wickeln oder Schneiden gut verarbeiten.

Der Oberflächenglanz wurde nach der Methode von ASTM – D2457 gemessen. Zur Messung des Brechungsindex diente ein Abbé-Refraktometer, mit Methylsalicylat als Einbettungsmedium. Der durchschnittliche Brechungsindex bezeichnet das arithmetische Mittel aus den Brechungsindices in Längs- und Querrichtung.

Nachfolgend ist eines der Herstellungsverfahren für die zur Anfertigung von Kondensatoren geeignete OPP-Folie beschrieben:

Ein Polypropylenrohmaterial, das keine die elektrischen Eigenschaften beeinträchtigenden Verunreinigungen enthält, wird in einen auf 250 bis 290°C gehaltenen Extruder eingefüllt und in der üblichen Weise zu einer Folie vergossen. Diese gegossene Folie wird dann auf beheizten Walzen, deren Temperatur bei 100 bis 150°C gehalten wird, um das 4- bis 6-fache ihrer ursprünglichen Länge längsverstreckt und anschliessend unter 90°C abgekühlt. Die in einer Richtung orientierte Folie wird in einem nächsten Schritt bei 130 bis 160°C in einem Spannrahmen um das 6- bis 12-fache ihrer ursprünglichen Breite querverstreckt und danach für 3 bis 10 s bei 150 bis 162°C mit 0 bis 10% Breitenrelaxation thermofixiert. Auf beheizten Walzen, deren Temperatur auf 130 bis 160°C gehalten wird, wird die biaxial orientierte Folie dann um das 1,4- bis 3,0-fache ihrer ursprünglichen OPP-Länge in Längsrichtung nachgestreckt, wobei die Breiteneinschnürung begrenzt wird. Es schliesst sich eine Thermofixierung bei 125 bis 165°C mit etwa 10% Längenrelaxation an. Der Streckvorgang muss in drei Schritte aufgeteilt werden, das sogenannte «Längs-Quer-Längs-Streckverfahren», und das Streckverhältnis insgesamt (erhalten durch Multiplikation der einzelnen Streckverhältnisse) muss mehr als das 75-fache betragen. Die Folie nach dieser Erfindung hat eine Dicke von weniger als 20 μm, vorzugsweise 3 bis 15 μm, insbesondere bevorzugt 4 bis 6 μm; die Eigenviskosität des Polypropylenrohmaterials beträgt vorzugsweise 1,7 bis 2,1 und die der OPP-Folie gleichfalls vorzugsweise 1,5 bis 1,8.

Der Kondensator besteht aus einer isolierenden Schicht der erfindungsgemässen OPP-Folie und einer leitenden Schicht aus Metall oder aus der mit Al, Cu, Au, Fe oder Ag metallisierten Folie.

## Beispiel 1

Ein Polypropylenrohmaterial mit einer Eigenviskosität von 1,8 wurde in einen auf 275 °C aufgeheizten Extruder mit einer Schnecke von 90 mm Durchmesser eingefüllt und durch eine Düse von 900 mm Breite und 0,6 mm Schlitzweite auf die Giesstrommel extrudiert. Die gegossene Folie wurde anschliessend auf beheizten Walzen bei einer Temperatur von 120 °C um das 4,7-fache ihrer ursprünglichen Länge längsverstreckt und bei 60 °C abgekühlt. An dieser in einer Richtung orientierten Folie erfolgte dann eine Querverstreckung in dem auf 150 °C gehaltenen Spannrahmen um das 10-fache ihrer ursprünglichen Breite, mit nachfolgendem Thermofixieren für die Dauer von 5 s bei 160 °C mit 5% Breitenrelaxation. Die biaxial orientierte Polypropylenfolie wurde bei einer Temperatur der beheizten Walzen von 155 °C um das 1,8-fache ihrer ursprünglichen OPP-Länge mit weniger als 10% Breiteneinschnürung in Längsrichtung nachgestreckt und danach bei 145 °C mit 5% Längenrelaxation und bei 90 °C mit 1% Längenrelaxation thermofixiert.

Die nach dem Längs-Quer-Längs-Streckverfahren hergestellte biaxial orientierte Polypropylenfolie hatte eine Dicke von 4,0 μm.

Die OPP-Folie wurde mit Aluminium in einer Dicke von 0,2 μm metallisiert und die metallisierte Folie anschliessend zu einem Kondensator aufgewickelt. Eine Ermittlung der elektrischen Eigenschaften dieses Kondensators und der Verarbeitungseigenschaften der OPP-Folie erbrachte die in Tabelle 1 eingetragenen Resultate. Aus dieser Tabelle ist ersichtlich, dass die OPP-Folie und der aus dieser Folie hergestellte Kondensator ausgezeichnete Eigenschaften haben.

Die in den Tabellen 1 und 2 verwendeten Zeichen haben die folgende Bedeutung:

### 1. Abweichung der elektrischen Kapazität

Der Kondensator mit einer Kapazität von 0,1 μF war aus einer OPP-Folie gewickelt, die nach der Methode der Japanischen Industrienorm (JIS) 2330 mit Aluminium in einer Dicke von 0,2 μm metallisiert worden war.

Eingestuft wurde in drei Grade entsprechend der Grössenordnung der Abweichung bei der elektrischen Kapazität nach Messungen an 50 Punkten.

$\bigcirc$ = Abweichung unter 5%
$\triangle$ = Abweichung über 10%
X = Abweichung zwischen 5 und 10%

### 2. Abweichung der Durchschlagsspannung Die Durchschlagsspannung wurde nach ASTM – D149 an 50 Punkten gemessen.

$\bigcirc$ = Abweichung unter 10%
X = Abweichung über 10%

### 3. Verarbeitungseigenschaften

$\bigcirc$ bedeutet, dass die OPP-Folie sich im Fertigungsprozess gleichmässig und ohne Faltenbildung aufwickeln liess, z.B. bei der Folienherstellung, beim Aufrollen, Metallisieren, Schneiden in Längsrichtung usw.

X wo $\bigcirc$ nicht zutreffend

## Tabelle 1

| Oberflächenglanz | durchschnittl. Brechungsindex i.d. Ebene | Brechungsindex in Längsrichtung | Abweichung d. elektrostatischen Kapazität | Abweichung d. Durchschlagsspannung | Elastizitätsmodul kg/mm² | Reibungskoeffizent | Verarbeitungseigenschaften |
|---|---|---|---|---|---|---|---|
| 148 | 1,513 | 1,518 | $\bigcirc$ | $\bigcirc$ | 360/300 (längs/quer) | 0,75 | $\bigcirc$ |

## Beispiel 2 (Vergleich)

Das Polypropylenrohmaterial war das gleiche wie in Beispiel 1. Es wurde in den Extruder eingefüllt und nach dem üblichen Verfahren durch eine Düse auf die Giesstrommel extrudiert. Die Oberflächentemperatur der Giesstrommel betrug in diesem Fall einmal 25 °C und einmal 110 °C. Als Probe 1 wurde die bei 25 °C vergossene Folie und als Probe 2 die bei 110 °C vergossene Folie bezeichnet. Diese gegossenen Folien wurden auf den auf 120 °C gehaltenen beheizten Walzen jeweils um das 5,1-fache ihrer ursprünglichen Länge längsverstreckt und dann bei 60 °C abgekühlt. Darauf folgte ein Querverstrecken der in einer Richtung orientierten Folien um das 10-fache ihrer ursprünglichen Breite in dem auf 150 °C gehaltenen Spannrahmen, mit anschliessender Thermofixierung für 5 s bei 160 °C mit 5% Breitenrelaxation. Die biaxial orientierten Polypropylenfolien hatten eine Dicke von 4 μm. Die Folien selbst und die daraus gewickelten Kondensatoren wurden bewertet. Die Ergebnisse dieser Bewertung sind in Tabelle 2 aufgeführt.

Tabelle 2

| Probe | 1 | 2 |
|---|---|---|
| Oberflächenglanz | 125 | 110 |
| durchschnittlicher Brechungsindex in der Ebene | 1,507 | 1,507 |
| Brechungsindex in Längsrichtung | 1,503 | 1,502 |
| Abweichung der elektrostatischen Kapazität | O | X |
| Abweichung der Durchschlagsspannung | X | X |
| Verarbeitungseigenschaften | X | X |

Die Kondensatoren aus den nach dem Längs-Quer-Streckverfahren hergestellten biaxial orientierten Folien haben nicht die ausgezeichneten elektrischen Eigenschaften der Kondensatoren aus den im Längs-Quer-Längs-Streckverfahren hergestellten Folien. Die beiden Folien aus Beispiel 2 können also nicht als elektrische Isolatoren eingesetzt werden.

**Patentansprüche**

1. Kondensator bestehend aus Schichten aus biaxial orientierter Polypropylenfolie und Metall, dadurch gekennzeichnet, dass die Polypropylenfolie einen nach der Methode von ASTM-D 2457 gemessenen Oberflächenglanz von mehr als 140%, einen durchschnittlichen Brechungsindex von mehr als 1,510 und einen Brechungsindex in Längsrichtung von mehr als 1,510 aufweist.

2. Kondensator nach Anspruch 1, dadurch gekennzeichnet, dass die Polypropylenfolie einen Oberflächenglanz von mehr als 150% aufweist.

3. Kondensator nach einem der Ansprüche 1 oder 2, dadurch gekennzeichnet, dass die Eigenviskosität der Polypropylenfolie 1,5 bis 1,8 beträgt.

4. Kondensator nach einem der Ansprüche 1 bis 3, dadurch gekennzeichnet, dass die Polypropylenfolie eine Stärke von 3 bis 15 μm aufweist.

5. Kondensator nach einem der Ansprüche 1 bis 4, dadurch gekennzeichnet, dass die Polypropylenfolie metallisiert ist.

**Claims**

1. Capacitor formed of layers of biaxially oriented polypropylene film and metal, characterised in that the polypropylene film has a surface gloss of more than 140%, as measured according to the method of ASTM-D 2457, an average refractive index of more than 1.510 and a refractive index in the longitudinal direction of more than 1.510.

2. A capacitor as claimed in claim 1, wherein the polypropylene film has a surface gloss of more than 150%.

3. A capacitor as claimed in any one of claims 1 and 2, wherein the intrinsic viscosity of the polypropylene film is in the range from 1.5 to 1.8.

4. A capacitor as claimed in any of claims 1 to 3, wherein the polypropylene film has a thickness in the range from 3 to 15 μm.

5. A capacitor as claimed in any of claims 1 to 4, wherein the polypropylene film is metallized.

**Revendications**

1. Condensateur constitué de couches de feuille de polypropylène orientée biaxialement et de métal, caractérisé en ce que la feuille de polypropylène présente un brillant de surface, mesuré par la méthode de ASTM-D 2457, de plus de 140%, un indice de réfraction moyen de plus de 1,510, et un indice de réfraction dans le sens longitudinal de plus de 1,510.

2. Condensateur suivant la revendication 1, caractérisé en ce que la feuille de polypropylène présente un brillant de surface de plus de 150%.

3. Condensateur suivant la revendication 1 ou 2, caractérisé en ce que la viscosité inhérente de la feuille de polypropylène est de 1,5 à 1,8.

4. Condensateur suivant l'une des revendications 1 à 3, caractérisé en ce que la feuille de polypropylène présente une épaisseur de 3 à 15 microns.

5. Condensateur suivant l'une des revendications 1 à 4, caractérisé en ce que la feuille de polypropylène est métallisée.